# EUROPÄISCHE PATENTSCHRIFT

(11) **EP 2 620 327 B1**
(45) Veröffentlichungstag und Bekanntmachung des Hinweises auf die Patenterteilung: **29.07.2015**
(21) Anmeldenummer: 13000326.2
(22) Anmeldetag: 23.01.2013
(51) Int. Cl.: B60R 5/04, B60R 9/06

(54) **Multifunktionseinheit für einen Personenkraftwagen**
Multifunctional unit for a passenger vehicle
Unité multifonction pour un véhicule de transport de passagers

(30) Priorität: 28.01.2012 DE 102012001669
(43) Veröffentlichungstag der Anmeldung: 31.07.2013
(73) Patentinhaber: WESTFALIA - Automotive GmbH, 33378 Rheda-Wiedenbrück (DE)
(72) Erfinder: Helm, Thorsten, D-48336 Sassenberg (DE)
(74) Vertreter: Patentanwälte Bregenzer und Reule Partnerschaftsgesellschaft mbB

(56) Entgegenhaltungen:
- FR-A1- 2 919 836
- US-A- 6 056 177
- US-A1- 2008 238 141

## Beschreibung

Die Erfindung bezieht sich auf eine Multifunktionseinheit für einen Personenkraftwagen nach dem Oberbegriff des Patentanspruchs 1. Eine derartige Multifunktionseinheit ist in US 2008/238141 A1 erläutert.

Die Erfindung betrifft eine Multifunktionseinheit für einen Personenkraftwagen, die vorzugsweise in einem Heck eines Aufbaus vorgesehen ist und einerseits als eine Hutablage oberhalb eines Aufbauraums wirkt und andererseits als Behälter zur Aufnahme von zu transportierenden Gegenständen einsetzbar ist, welcher Behälter von einer zusammengelegten Ruhestellung in eine aufgestellte Betriebstellung verwandelbar ist und vice versa.

Es ist eine Vorrichtung zur Unterbringung transportabler Gegenstände in einem Personenkraftwagen bekannt, DE 100 07 137 B4, die in einem Heck innerhalb eines Aufbaus dieses Personenkraftwagens angeordnet ist, und zwar oberhalb eins Gepäckraums. Diese Vorrichtung erstreckt sich über eine wesentliche Breite und Länge eines Gepäckraums und weist ein Oberteil und einen Faltboden auf, der gegenüber dem Oberteil absenkbar ist und zur Aufnahme von zu transportierenden Gegenständen ausgebildet ist. Darüber hinaus wirkt die Vorrichtung als Multifunktionseinheit, da sie nicht nur einen Innenraum zur Gepäckunterbringung besitzt, sondern auch als Hutablage wirksam ist.

Aus der EP 1 717 104 A1 geht ein Gepäckbehälter für Fahrzeuge hervor, der in eine horizontale Lage zwischen einem Fahrgastraum und einer Heckhaube des jeweiligen Fahrzeugs vorgesehen ist. Im Innenraum des Gepäckbehälters können Transportgegenstände eingelagert werden. Der Gepäckbehälter kann in vertikaler Richtung aus- und eingeklappt werden, wodurch der Raum zur Aufnahme der Transportgegenstände bezüglich Volumen veränderbar ist.

Die DE 37 34 774 A1 behandelt einen Zusatzkofferraum für ein kombiähnliches Kraftfahrzeug. Der Zusatzkofferraum wird durch einen eine Wanne und einen Deckel umfassenden Behälter begrenzt, welcher Deckel über ein Scharnier mit der Wanne zusammenwirkt. Besagter Behälter bzw. Deckel kann als Ersatz für eine Hutablage genutzt werden, so dass dieser Behälter eine Multifunktionseinheit darstellt.

Die US 6056177 A1 behandelt eine Multifunktionseinheit nach dem Oberbegriff des Anspruchs 1.

Aufgabe der Erfindung ist es, eine Multifunktionseinheit für einen Personenkraftwagen zu konzipieren, die in einem Heck eines Aufbaus des Personenkraftwagens vorsehbar ist und zum einen eine wirksame Hutablage innerhalb des Aufbaus und zum anderen einen funktionsgerechten Behälter zur Aufnahme von zu transportierenden Gegenständen bildet. Dabei sollte aber auch sichergestellt werden, dass das Volumen des Behälters optimiert ist.

Zur Lösung der Aufgabe ist bei einer Multifunktionseinheit der eingangs genannten Art vorgesehen, dass der nach Art eines Kastens aufgebaute Behälter außerhalb des Aufbaus an einem Trägersystem festlegbar ist und aufrechte Wände umfasst, die sich in der Betriebstellung auf einem Boden abstützen und einen Deckel tragen, wobei die Wände der Boden und der Deckel im Wesentlichen aus formsteifem Werkstoff bestehen und in der Ruhestellung eine relativ flache paketartige Baueinheit darstellen, die in den Aufbauraum als die Hutablage einbaubar ist.

Das Trägersystem umfasst zweckmäßigerweise einen Heck-Lastenträger.

Nach der Erfindung wird diese Aufgabe durch die Merkmale des Patentanspruchs 1 gelöst. Weitere die Erfindung ausgestaltende Merkmale sind in den Unteransprüchen enthalten.

Die mit der Erfindung hauptsächlich erzielten Vorteile sind darin zu sehen, dass die Multifunktionseinheit des Personenkraftwagens innerhalb des Aufbaus, und zwar oberhalb eines Aufbauraums, der bspw. ein Kofferraum sein kann, als Hutablage mit vorbildlichen Abdeckungsabmessungen fungiert. Dabei ist die Hutablage ein Behälter in zusammengelegter Ruhestellung.

Der Behälter ist in der aufgestellten Betriebsstellung geeignet, zu transportierende Gegenstände, zusätzlich zu den im Aufbauraum bereits vorhandenen Gegenständen, aufzunehmen. Dadurch kann bei entsprechender Konstruktion des außerhalb des Aufbaus im Heck an einem Trägersystem befestigten Behälters das Volumen für den Transport beweglicher Gegenstände -Koffer, Taschen, Kleinteile oder dgl.- signifikant erhöht werden, was den automobiltechnischen Entwicklungsbestrebungen Rechnung trägt, Aufbauten von Personenkraftwagen kompakter -Downsizing- und als Konsequenz die Gepäckaufnahme flexibler zu gestalten.

Vorteilhaft ist vorgesehen, dass die durch den Behälter in seiner Ruhestellung gebildete Hutablage an Längsträgern einer Interieurstruktur des Aufbaus angebracht ist. Die Längsträger sind zweckmäßigerweise mit L-förmigen Querschnitten versehen. Die Hutablage, verkörpert durch den Behälter in seiner Ruhestellung, wird zweckmäßigerweise auf einfache Weise von den im Querschnitt L-förmigen Längsträgern der Interieurstruktur aufgenommen oder abgestützt.

Die Multifunktionseinheit hat zweckmäßigerweise eine an die jeweilige Interieurstruktur des Personenkraftwagens angepasste Außenkontur. Die Multifunktionseinheit kann beispielsweise als Ersatz für eine konventionelle, keine Multifunktionseinheit bildende Hutablage dienen. Die Außenkontur der Multifunktionseinheit ist zweckmäßigerweise zumindest in demjenigen Bereich, wo sie mit der Interieurstruktur des Personenkraftwagens in Kontakt kommt, konturgleich mit derjenigen der konventionellen Hutablage.

Eine zweckmäßige Variante der Erfindung sieht vor, dass die Multifunktionseinheit einen Bestandteil eines Systems bildet, das zumindest eine Interieurkomponente einer mit dem Personenkraftwagen fest verbindbaren Interieurstruktur bildet. Die Interieurkomponente kann beispielsweise von einem oder beiden der oben genannten Längsträger gebildet sein. Die Komponente ist beispielsweise im Innenraum des Kraftfahrzeugs mittels Schrauben, Rastbolzen oder dergleichen befestigbar.

Vorteilhaft ist vorgesehen, dass die Hutablage unter Vermittlung von Rastbolzen und Rastaufnahmen an der Interieursstruktur oder dem Trägersystem in Lage gehalten ist. Dabei ist es vorteilhaft, wenn die Rastbolzen an der Hutablage oder dem Trägersystem und die Rastaufnahmen an den Längsträgern angebracht sind. Es ist auch möglich, dass die Rastaufnahmen an der Multifunktionseinheit und die Rastvorsprünge am Fahrzeug-Interieur oder dem Trägersystem angeordnet sind.

Musterhaft ist z.B., dass die Rastbolzen an den Längselementen der Hutablage einerseits entlang der Schenkel der Längsträger mit L-förmigem Querschnitt bewegbar und andererseits in die Rastaufnahmen dieser Längsträger einrückbar sind, wodurch die Hutablage festgelegt ist.

Die Multifunktionseinheit umfasst beispielsweise Lagervorsprünge, die an langgestreckten, beispielsweise als Kulissenbahnen ausgestalteten Lageraufnahmen, z.B. Längsnuten oder Lagerbahnen, des Personenkraftwagens längsverstellbar geführt oder führbar sind, beispielsweise in der Art von Kulissenfolgern. Somit umfasst also die Multifunktionseinheit beispielsweise Kulissenfolger.

Die später noch als Rastbolzen ausgestalteten Komponenten könnte man auch als Lagervorsprünge bezeichnen, die zum einen, solange sie an einer Längskulisse, beispielsweise den Längsträgern der Interieurstruktur, entlang verschoben werden, sozusagen Kulissenfolger bilden, und/oder, wenn sie in die als Rastaufnahmen bezeichneten Lageraufnahmen eingreifen, Lagervorsprünge oder Bestandteile eines Schwenklagers bilden.

Vorteilhaft ist vorgesehen, dass zur Fixierung der Hutablage zwischen den Rastbolzen und den Rastaufnahmen Verriegelungen vorgesehen sind.

Der am Trägersystem gehaltene Behälter ist vorteilhaft in einem rückwärtigen Bereich des Aufbaus außerhalb einer Heckklappe angeordnet.

Das Trägersystem für den Behälter ist dem rückwärtigen Bereich des Aufbaus sinnfällig außerhalb der Heckklappe zugeordnet.

Das Trägersystem umfasst vorzugsweise eine nach Art einer im Bereich eines Stoßfängers des Fahrzeug-Aufbaus vorgesehenen aus- und einziehbaren Schublade. Das Trägersystem umfasst vorteilhaft eine im Bereich eines Heckstoßfängers des Aufbaus vorgesehene von einer ausgefahrenen Stellung in eine eingefahrene Stellung bewegbare Schublade. Die Multifunktionseinheit bildet zweckmäßigerweise einen Bestandteil des Trägersystems.

Es ist auch möglich, dass das Trägersystem eine an einer Anhängekupplung oder einer sonstigen Halterung des Kraftfahrzeugs lösbar befestigbare Tragstruktur umfasst, beispielsweise einen sogenannten Heck-Lastenträger.

Die Multifunktionseinheit umfasst zweckmäßigerweise Befestigungsmittel zur Befestigung an einem Trägersystem, beispielsweise einem in der Art einer Schublade aus dem Heck des Kraftfahrzeugs ausfahrbarem Lastenträger oder einen an einer Anhängekupplung oder einer sonstigen Halterung lösbar am Personenkraftfahrzeug befestigbaren Lastenträger. Die Lastenträger-Befestigungsmittel umfassen beispielsweise Rastvorsprünge, Rastaufnahmen, Haltevorsprünge, Halteaufnahmen oder dergleichen.

Es ist auch möglich, dass ein Schloss zum Abschließen der Multifunktionseinheit an dem Trägersystem und/oder eines Deckels der Multifunktionseinheit vorgesehen ist.

Bei der Multifunktionseinheit ist vorteilhaft vorgesehen, dass in der Betriebsstellung des Behälters der Deckel mittels Verschlüssen mit bspw. gegenüberliegenden Wänden in Wirkverbindung steht, wobei nach Öffnen dieser Verschlüsse der Behälter in die Ruhestellung umwandelbar ist, dergestalt dass die Wände auf dem Boden gestapelt werden und der Deckel über die Verschlüsse mit dem Boden und dem Deckel die Baueinheit bilden.

Schließlich zeichnet sich der Behälter durch eine ausgeklügelte Bauweise aus, denn sein Deckel steht mittels Verschlüssen mit bspw. gegenüberliegenden Wänden in Wirkverbindung. Nach dem Öffnen dieser Verschlüsse ist der Behälter aus der Betriebsstellung in die Ruhestellung umwandelbar, derart, dass die Wände auf den Boden umgelegt werden, und der Deckel über die Verschlüsse mit dem Boden und dem Deckel die Baueinheit Hutablage bilden.

Die Hutablage ist zweckmäßigerweise in einem -in Fahrtrichtung betrachtet- vorderen Bereich mit einer quer zur Fahrzeuglängsrichtung verlaufenden, horizontalen Schwenkachse versehen.

Die Multifunktionseinheit weist zweckmäßigerweise Lagervorsprünge auf, die sich an Lageraufnahmen im Innenraum des Personenkraftwagens, beispielsweise den oben als Rastaufnahmen bezeichneten Komponenten, abstützen können. Selbstverständlich kann die Multifunktionseinheit auch ein komplettes Schwenklager umfassen, das heißt Lageraufnahme und Lagervorsprung, die ineinander eingreifen. Das Schwenklager ist zweckmäßigerweise an der Interieurstruktur des Personenkraftwagens lösbar befestigbar.

Eine vorteilhaft Ausgestaltung sieht vor, dass an der Hutablage Betätigungsmittel z.B. in Form von Seilen angreifen, die mit der Heckklappe verbunden sind.

In der Zeichnung wird ein Ausführungsbeispiel der Erfindung gezeigt, das nachstehend näher beschrieben wird.

Es zeigen:
- Fig. 1: eine Schrägansicht auf einen Personenkraftwagen von hinten links,
- Fig. 2: eine Ansicht entsprechend Fig. 1 mit einem Trägersystem und einer darauf festgelegten Multifunktionseinheit in Gestalt eines Behälters in einer Betriebsstellung,
- Fig. 3: eine Schrägansicht ähnlich Fig.1 in größerem Maßstab mit der innerhalb eines Fahrgastraums des Personenkraftwagen festgesetzten Multifunktionseinheit in Gestalt einer Hutablage,
- Fig. 4: eine Einzeldarstellung des Behälters in der Betriebstellung,
- Fig. 5: eine Einzeldarstellung des Behälters in einer Zwischenstellung,
- Fig. 6: eine Einzeldarstellung des Behälters in der RuheStellung,
- Fig. 7: eine Schrägansicht von hinten links oben auf das Heck des Personenkraftwagens nach Fig. 1 mit einer weiteren Ausführungsform der Multifunktionseinheit,
- Fig. 8: eine Ansicht entsprechend Fig. 7.

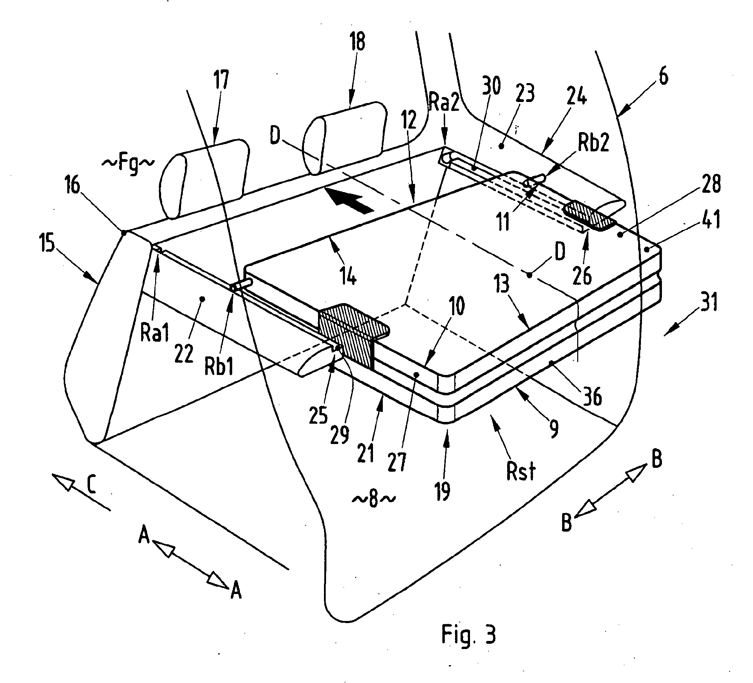

Ein Personenkraftwagen 1 weist einen Aufbau 2 auf, der von Rädern 3 und 4 getragen wird. Der Aufbau 2 ist in einem Steilheck 5 mit einer öffenbaren Heckklappe 6 mit einer Heckscheibe 7 versehen, über welche Heckklappe 6 ein Aufbauraum 8, auch Kofferraum genannt, zugänglich ist, der zur Aufnahme von Gegenständen wie Koffer, Taschen oder dgl. -nicht dargestellt- geeignet ist. Oberhalb des Aufbauraums 8 ist eine Hutablage 9 -Fig. 3- vorgesehen, die eine etwa rechteckige Grundform besitzt, deren kürzere Seiten 10 und 11 in Fahrzeuglängsrichtung A-A verlaufen; die längeren Seiten 12 und 13 in Fahrzeugquerrichtung B-B. Die Hutablage 9 grenzt-in Fahrtrichtung C betrachtet- mit einer Vorderseite 14 direkt oder mit Abstand an eine Rücksitzanlage 15 an, von der eine Rückenlehne 16 und Kopfstützen 17 und 18 dargestellt sind.

Die Hutablage 9 ist Bestandteil einer Multifunktionseinheit 19, zu der auch noch ein nach Art eines Kastens gestalteter Behälter 20 gehört, wobei der Behälter 20 von einer zusammengelegten Ruhestellung Rst -Hutablage 9- in eine Betriebsstellung Bst -Behälter 20- verwandelbar ist und umgekehrt. In der Betriebsstellung Bst des Behälters 20 lassen sich zusätzlich zu den Gegenständen im Aufbauraum 8 weitere zu transportierende Gegenstände -Koffer, Taschen, Kleinteile oder dgl.- ablegen.

In der Ruhestellung Rst wirkt, wie bereits ausgeführt, der Behälter 20 als Hutablage 9, die als flache paketartige Baueinheit 21 über dem Aufbauraum 8 in einen Fahrgastraum Fg einbaubar ist. Dabei ist die Hutablage 9 an mit Abstand zu einer Mittellängsebene D-D an Längsträgern 22 und 23 einer Interieurstruktur 24 des Aufbaus 2 befestigt -Fig.3-. Die Längsträger 22 und 23 weisen L-förmige Querschnitte 25 und 26 auf. Benachbart dieser L-förmigen Querschnitte 25 und 26 der Längsträger erstrecken sich mit parallelem Abstand zu letzteren Längselemente 27 und 28 der Hutablage 9.

In der Nähe der Vorderseite 14 der Hutablage 9 verlaufen in Fahrzeugquerrichtung B-B Rastbolzen Rb1 und Rb2, die an den Längselementen 27 und 28 angebracht sind und mit Schenkeln 29 und 30 der L-förmigen Querschnitte 25 und 26 zusammenwirkbar ausgeführt sind. In der vollständig eingeführten Betriebsstellung Bst der Hutablage 9 greifen die Rastbolzen Rb1 und Rb2 in Rastaufnahmen Ra1 und Ra2 der Längsträger 22 und 23 ein. Sobald die Rastbolzen Rb1 und Rb2 der Längselemente 27 und 28 in die etwa U-förmigen Rastaufnahmen Ra1 und Ra2 eingreifen können Verriegelungen -nicht abgebildet- wirksam werden, die einem unerwünschtes Lösen der Hutablage 9 entgegen wirken. Denkbar ist aber auch, die Rastaufnahmen Ra1 und Ra2 an der Hutablage 9 und die Rastbolzen Rb1 und Rb2 an den Längsträgern 22 und 23 vorzusehen.

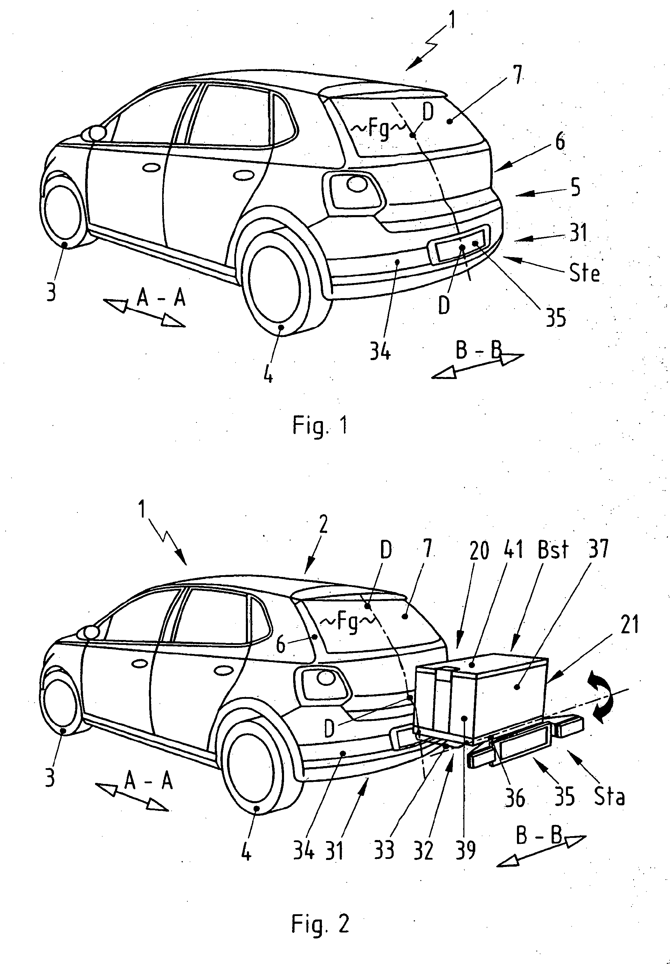

In der Betriebsstellung Bst des Behälters 20 ist dieser in einem rückwärtigen Bereich 31, und zwar außerhalb der Heckklappe 6 des Aufbaus 2 an einem Trägersystem 32 befestigt -Fig.2-, das in den Personenkraftwagen 1 integriert ist oder bedarfsweise mit dem Aufbau 2 verbindbar ist. Das Trägersystem 32 verfügt über beiderseits der Mittellängsebene Dz verlaufende Längsstreben 33, an denen der Behälter 20 in der Betriebsstellung Bst gesichert ist. Denkbar ist das Trägersystem 32 nach Art einer im Bereich eines Heckstoßfängers 34 des Aufbaus 2 vorgesehenen Schublade 35 auszubilden, die zwischen einer ausgefahrenen Stellung Sta und einer eingefahrenen Stellung Ste bewegbar ist. Die Schublade 35 ist in der eingefahrenen Ste in vollem Umfang im Heckstoßfänger 34 versenkt.

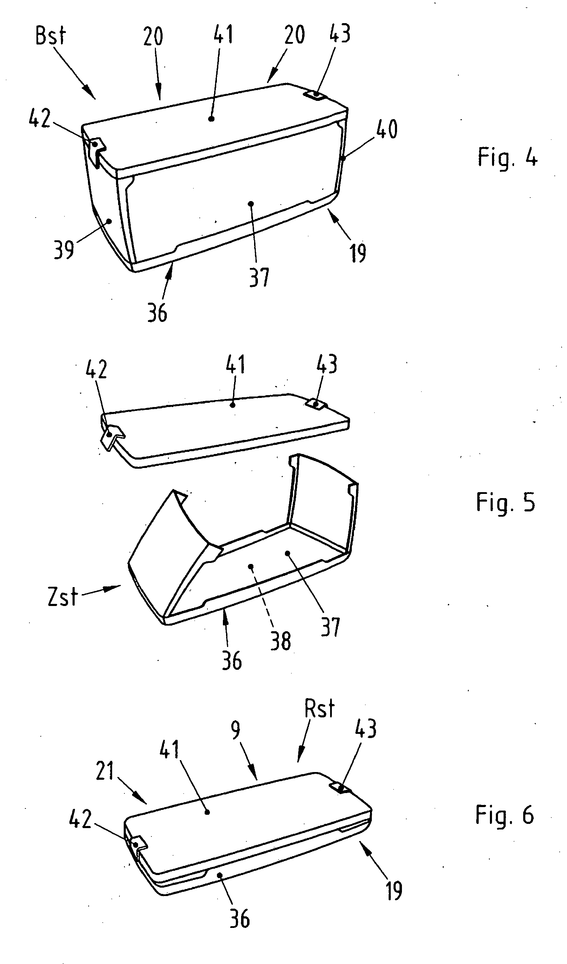

Der Behälter 20 wird gemäß Fig. 4 -Betriebsstellung Bst- durch einen Boden 36, längere aufrechte Wände 37 und 38, kürzere aufrechte Wände 39 und 40 sowie einen Deckel 41 gebildet. Der Boden 36, die Wände 37 und 39 bzw. 39 und 40 bestehen aus formsteifem Werkstoff -Leichtmetall, Kunststoff, Verbundmaterial oder dgl. In der Betriebsstellung Bst des Behälters 20 steht der Deckel 41 unter Zwischenschaltung von Verschlüssen 42 und 43 mit gegenüberliegenden Wänden bspw. 39 und 40 in Wirkverbindung. Nach dem Öffnen der Verschlüsse 42 und 43 ist der Behälter 20 in die Ruhestellung Rst umwandelbar. Die Wände 37 und 38 bzw. 39 und 40 sind über Steckverbindungen, Scharniere oder dgl. untereinander bzw. mit dem Boden 36 verbunden -nicht abgebildet-, und lassen sich bei geöffneten Verschlüssen 42 und 43 auf dem Boden 36 horizontal ablegen -In Fig. 5 schematisch dargestellt-. Und der Deckel 41 wiederum wird auf den Wänden 37 und 38 bzw. 39 und 40 gestapelt. Darüber hinaus bilden unter Vermittlung der Verschlüsse 42 und 43 der Boden 36, die Wände 39 und 40 bzw. 37 und 38 und der Deckel 41 die Baueinheit 21, die dann als Hutablage 9 in den Fahrgastraum Fg einsetzbar ist.

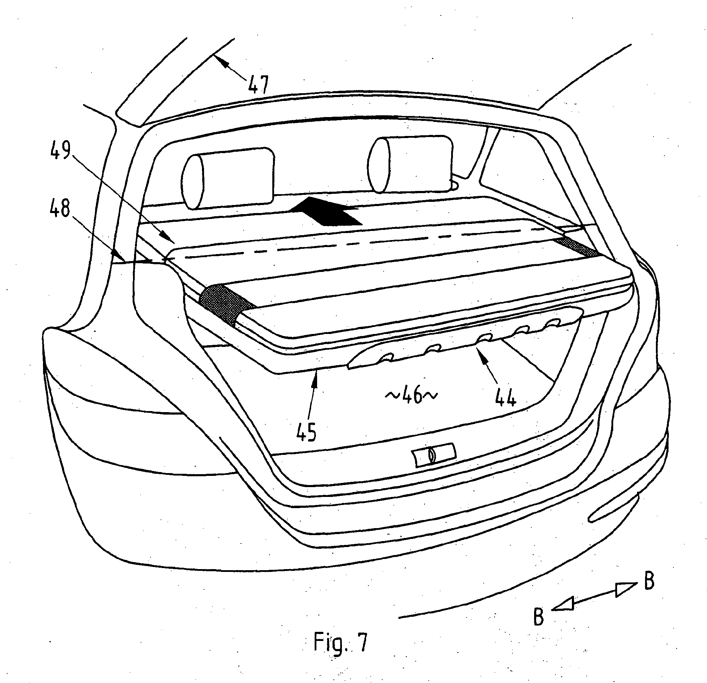

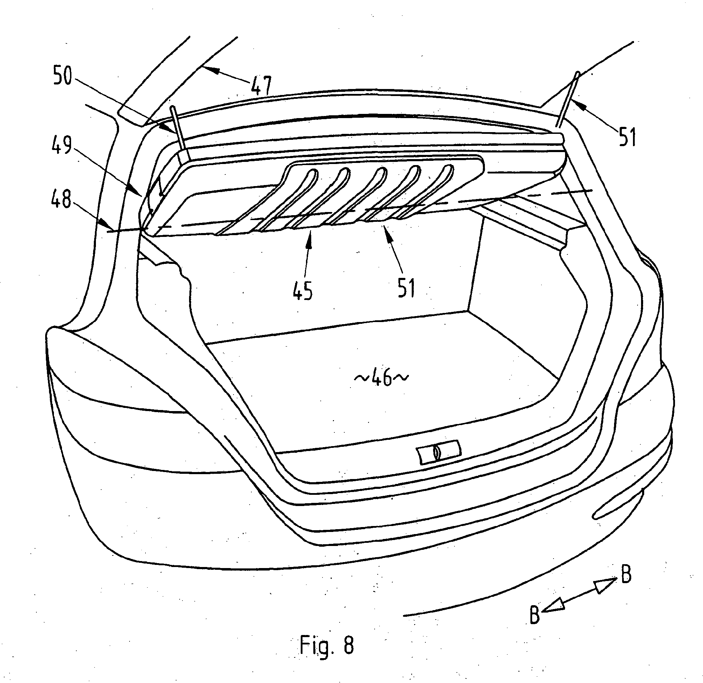

In den Fig. 7 und 8 ist eine weitere Ausführungsform einer prinzipiell der Multifunktionseinheit 19 entsprechenden Multifunktionseinheit 44 dargestellt, die sich in der Ruhestellung Rst befindet und die Funktion einer Hutablage 45 übernimmt und dazu oberhalb eines Aufbauraums 46 angebracht ist. Nach Öffnen einer Heckklappe 47 ist die Hutablage 45 über Schienen, Halteeinrichtungen oder dgl. an einer Interieurstruktur festlegbar. Hierbei ist die Hutablage 45 um die quer zur Fahrzeuglängsrichtung verlaufende, horizontale Schwenkachse 48, die in einem -in Fahrtrichtung C betrachtet- vorderen Bereich 49 der besagten Hutablage 45 verläuft, schwenkbar. Die Schwenkachse 48 kann koaxial zu Rastbolzen Rb1 und Rb2 bzw. Ra1 und Ra2. Darüber hinaus greifen an der Hutablage 45 Betätigungsmittel 50 und 51 z.B. in Form von Seilen an, die mit der Heckklappe 47 verbunden sind. Dadurch wird bei geöffneter Heckklappe 47 die Hutablage 45 schräg gestellt, so dass der Zugang zum Aufbauraum 46 erleichtert wird.

## Patentansprüche

1. Multifunktionseinheit für einen Personenkraftwagen, die als Behälter (20) zur Aufnahme von zu transportierenden Gegenständen einsetzbar ist, welcher Behälter (20) von einer zusammengel,egten Ruhestellung (Rst) in eine aufgestellte Betriebstellung (Bst) verwandelbar ist und vice versa, wobei der nach Art eines Kastens aufgebaute Behälter (20) außer halb des Aufbaus (2) an einem Trägersystem (32) festlegbar ist und aufrechte Wände (37; 38 und 39; 40) umfasst, die sich in der Betriebstellung (Bst) auf einem Boden (36) abstützen und einen Deckel (41) tragen, wobei die Wände (37; 38 und 39; 40) der Boden (36) und der Deckel (41) im Wesentlichen aus formsteifem Werkstoff bestehen und in der Ruhestellung (Rst) eine relativ flache paketartige Baueinheit (21) darstellen, **dadurch gekennzeichnet, dass** sie als die in der Ruhestillung (Rst) eine flache paketartige Baueinheit (21) bildend oberhalb eines Aufbauraum (8) in einem Heck des Personenkraftwagens als eine Hutablage (9) einbaubar ist, und dass sie in der Funktion als die Hutablage (9) unter Vermittelung von Rastbolzen (Rb1 und Rb2) und Rastaufnahmen (Ra1 und Ra2) in Lage gehalten ist, wobei mindestens ein Rastbolzen (Rb1 und Rb2) an der Hutablage (9) und mindestens eine Rastaufnahme (Ra1 und Ra2) an Längsträgern (22 und 23) der Interieurstruktur (24) und/oder mindestens eine Rastaufnahme an der Hutablage (9) und mindestens ein Rastbolzen an Längsträgern (22 und 23) der Interieurstruktur (24) angebracht sind.

2. Multifunktionseinheit nach Anspruch 1, **dadurch gekennzeichnet, dass** die durch den Behälter (20) in seiner Ruhestellung (Rst) gebildete Hutablage (9) an einer Interieurstruktur (24) des Aufbaus (2), insbesondere an Längsträgern (22 und 23) der Interieurstruktur (24), anbringbar ist.

3. Multifunktionseinheit nach Anspruch 2, **dadurch gekennzeichnet, dass** die Längsträger (22 und 23) mit L-förmigen Querschnitten (25 und 26) versehen sind.

4. Multifunktionseinheit nach einem der vorhergehenden Ansprüche, **dadurch gekennzeichnet, dass** zur Fixierung der Hutablage (9) zwischen den Rastbolzen (Rb1 und Rb2) und den Rastaufnahmen (Ra1 und Ra2) Verriegelungen vorgesehen sind.

5. Multifunktionseinheit nach einem der vorhergehenden Ansprüche, **dadurch gekennzeichnet, dass** der am Trägersystem (32) gehaltene Behälter (20) in einem rückwärtigen Bereich (31) des Aufbaus (2) außerhalb einer Heckklappe (6) anordenbar oder angeordnet oder zur Anordnung in dem rückwärtigen Bereich (31) des Aufbaus (2) vorgesehen und ausgestaltet ist und/oder dass sie einen Bestandteil eines Systems bilden, die das Trägersystem (32) umfasst.

6. Multifunktionseinheit nach Anspruch 5, **dadurch gekennzeichnet, dass** das Trägersystem (32) eine im Bereich eines Heckstoßfängers (34) des Aufbaus (2) vorgesehene von einer ausgefahrenen Stellung (Sta) in eine insbesondere in einer Karosserie des Personenkraftwagens eingefahrene Stellung (Ste) bewegbare Schublade (35) oder einen an einer Anhängekupplung oder einer sonstigen Halterung des Personenkraftwagens lösbar befestigbaren Heck-Lastenträger umfasst.

7. Multifunktionseinheit nach einem oder mehreren der vorangehenden Ansprüche, **dadurch gekennzeichnet, dass** in der Betriebsstellung (Bst) des Behälters (20) der Deckel (41) mittels Verschlüssen (42 und 43) mit bspw. gegenüberliegenden Wänden (z.B. 39 und 40) in Wirkverbindung steht, wobei nach Öffnen dieser Verschlüsse (42 und 43) der Behälter (20) in die Ruhestellung (Rst) umwandelbar ist, dergestalt dass die Wände (37 und 38) auf dem Boden (36) gestapelt werden und der Deckel (41) über die Verschlüsse (42 und 43) mit dem Boden (36) und dem Deckel (41) die Baueinheit (21) bilden.

8. Multifunktionseinheit nach einem oder mehreren der vorangehenden Ansprüche, **dadurch gekennzeichnet, dass** sie in ihrer Funktion als die Hutablage (45) in einem -in Fahrtrichtung betrachtet- vorderen Bereich (49) mit einer quer zur Fahrzeuglängsrichtung verlaufenden, horizontalen Schwenkachse (48) versehen ist und/oder dass sie ein Schwenklager, insbesondere Lagervorsprünge, zur Lagerung um die Schwenkachse (48) aufweist.

9. Multifunktionseinheit nach einem der vorhergehenden Ansprüche, **dadurch gekennzeichnet, dass** an der Hutablage (45) Betätigungsmittel (50 und 51) z.B. in Form von Seilen angreifen, die mit der Heckklappe (47) verbunden sind und/oder dass sie mindestens einen Mitnehmer, insbesondere ein Seil, der zur Befestigung an dem Personenkraftwagen vorgesehen ist, und/oder oder eine Halterung für einen Mitnehmer, insbesondere ein Seil, aufweist, wobei die als Hutablage (45) dienende Multifunktionseinheit durch den Mitnehmer bei einer Betätigung eines Karosserieteils, insbesondere einer Heckklappe, oder einer sonstigen Komponente des Personenkraftwagens, an der der Mitnehmer befestigt ist, verstellbar ist.

10. Multifunktionseinheit nach einem der vorhergehenden Ansprüche, **dadurch gekennzeichnet, dass** sie ein Schloss zum Abschließen der Multifunktionseinheit an dem Trägersystem und/oder ein Schloss zum Abschließen eines Deckels der Multifunktionseinheit aufweist.

11. Multifunktionseinheit nach einem der vorhergehenden Ansprüche, **dadurch gekennzeichnet, dass** sie einen Bestandteil eines Systems bildet, das zumindest eine Interieurkomponente einer mit dem Personenkraftwagen fest verbindbaren Interieurstruktur (24), insbesondere Längsträger (23, 23) der Interieurstruktur (24), umfasst.

12. Multifunktionseinheit nach einem der vorhergehenden Ansprüche, **dadurch gekennzeichnet, dass** sie eine an die Interieurstruktur (24) des Personenkraftwagens angepasste Außenkontur aufweist.

## Claims

1. Multi-functional unit for a passenger car, which can be used as a container (20) for the reception of objects to be transported, the container (20) being convertible from a collapsed inoperative position (Rst) to an erected operative position (Bst) and vice versa, wherein the container (20), which is constructed in the manner of a box, can be secured outside the bodywork to a support system (32) and has upright walls (37; 38 and 39; 40), which are supported on a base (36) and carry a cover (41) in the operative position (Bst), wherein the walls (37; 38 and 39; 40), the base (36) and the cover (41) substantially consist of a dimensionally rigid material and in the inoperative position (Rst) represent a relatively flat, pack-type unit (21), **characterised in that** the unit (21) representing a flat pack in the inoperative position (Rst) can be installed in a rear of the passenger car as a rear shelf (9) above a bodywork space (8), and **in that** it is, when acting as rear shelf (9), held in position by means of latching bolts (Rb1 and Rb2) and latching receptacles (Ra1 and Ra2), wherein at least one latching bolt (Rb1 and Rb2) is mounted on the rear shelf (9) and at least one latching receptacle (Ra1 and Ra2) is mounted on side members (22 and 23) of the interior structure (24) and/or at least one latching receptacle is mounted on the rear shelf (9) and at least one latching bolt is mounted on side members (22 and 23) of the interior structure (24).

2. Multi-functional unit according to claim 1, **characterised in that** the rear shelf (9) represented by the container (20) in its inoperative position (Rst) can be mounted on an interior structure (24) of the bodywork (2), in particular on side members (22 and 23) of the interior structure (24).

3. Multi-functional unit according to claim 1, **characterised in that** the side members (22 and 23) are provided with L-shaped cross-sections.

4. Multi-functional unit according to any of the preceding claims, **characterised in that** interlocks are provided between the latching bolts (Rb1 and Rb2) and the latching receptacles (Ra1 and Ra2) for the location of the rear shelf (9).

5. Multi-functional unit according to any of the preceding claims, **characterised in that** the container (20) held on the support system (32) can be or is located in a rear region (31) of the bodywork (2) outside a tailgate (6) or is provided and designed for location in a rear region (31) of the bodywork (2), and/or **in that** it forms a part of a system which includes the support system (32).

6. Multi-functional unit according to claim 5, **characterised in that** the support system (32) comprises a drawer (35) provided in the region of a rear bumper (34) of the bodywork (2) and movable from an extended position (Sta) into a retracted, in particular retracted into the body of the passenger car, position (Ste), or a rear load carrier which can be releasably mounted on a trailer coupling or another holder of the passenger car.

7. Multi-functional unit according to one or more of the preceding claims, **characterised in that**, in the operative position (Bst) of the container (20), the cover (41) is operationally connected to, e.g., opposite walls (e.g. 39 and 40) by means of fasteners (42 and 43), the container (20) being convertible into the inoperative position (Rst) following the opening of these fasteners (42 and 43) in such a way that the walls (37 and 38) are stacked on the base (36) and the cover (41), by way of the fasteners (42 and 43), forms the unit (21) together with the base (36) and the cover (41).

8. Multi-functional unit according to one or more of the preceding claims, **characterised in that** it is, when acting as the rear shelf (45), provided in a front region - as viewed in the direction of travel - with a horizontal swivel axis (48) extending in the longitudinal direction of the vehicle, and/or **in that** it comprises a pivot bearing, in particular bearing projections, for mounting about the swivel axis (48).

9. Multi-functional unit according to any of the preceding claims, **characterised in that** operating means (50 and 51), e.g. in the form of cables, act on the rear shelf (45), and/or **in that** is comprises at least one driver, in particular a cable, provided for mounting on the passenger car and/or a holder for a driver, in particular a cable, wherein the multi-functional unit serving as a rear shelf (45) can be adjusted by the driver when a body part, in particular a tailgate or another component of the passenger car to which the driver is secured, is operated.

10. Multi-functional unit according to any of the preceding claims, **characterised in that** it comprises a lock for locking the multi-functional unit on the support system and/or a lock for locking a cover of the multi-functional unit.

11. Multi-functional unit according to any of the preceding claims, **characterised in that** it forms a part of a system which includes at least one interior component of an interior structure (24) permanently connectable to the passenger car, in particular side members (23, 23) of the interior structure (24).

12. Multi-functional unit according to any of the preceding claims, **characterised in that** it has an external contour matching the interior structure (24) of the passenger car.

## Revendications

1. Unité multifonction pour une voiture particulière qui peut être utilisée en tant que récipient (20) pour la réception d'objets à transporter, lequel récipient (20) peut être modifié d'une position de repos (Rst) repliée à une position de fonctionnement (Bst) installée et inversement, le récipient (20) constitué comme une caisse pouvant être fixé en dehors de la construction (2) sur un système porteur (32) et comportant des parois verticales (37 ; 38 et 39 ; 40) qui s'appuient dans la position de fonctionnement (Bst) sur un fond (36) et portent un couvercle (41), les parois (37 ; 38 et 39 ; 40), le fond (36) et le couvercle (41) étant constitués sensiblement de matériau indéformable et forme dans la position de repos (Rst) une unité structurelle (21) de type paquet relativement plate, **caractérisée en ce qu'**elle est encastrable au-dessus d'un espace de construction (8) dans une partie arrière de la voiture particulière comme une plage arrière (9), lorsqu'elle forme dans la position de repos (Rst) une unité structurelle plate de type paquet (21) et **en ce qu'**elle est maintenue en position dans la fonction de plage arrière (9) par l'intermédiaire de boulons d'encliquetage (Rb1 et Rb2) et de logements d'encliquetage (Ra1 et Ra2), au moins un boulon d'encliquetage (Rb1 et Rb2) étant monté sur la plage arrière (9) et au moins un logement d'encliquetage (Ra1 et Ra2) sur des longerons (22 et 23) de la structure intérieure (24) et/ou au moins un logement d'encliquetage sur la plage arrière (9) et au moins un boulon d'encliquetage sur des longerons (22 et 23) de la structure intérieure (24).

2. Unité multifonction selon la revendication 1, **caractérisée en ce que** la plage arrière (9) formée par le récipient (20) dans sa position de repos (Rst) peut être montée sur une structure intérieure (24) de la construction (2), en particulier sur des longerons (22 et 23) de la structure intérieure (24).

3. Unité multifonction selon la revendication 2, **caractérisée en ce que** les longerons (22 et 23) sont pourvus de section en L (25 et 26).

4. Unité multifonction selon l'une quelconque des revendications précédentes, **caractérisée en ce que** des verrouillages sont prévus pour la fixation de la plage arrière (9) entre les boulons d'encliquetage (Rb1 et Rb2) et les logements d'encliquetage (Ra1 et Ra2).

5. Unité multifonction selon l'une quelconque des revendications précédentes, **caractérisée en ce que** le récipient (20) maintenu sur le système porteur (32) peut être agencé ou est agencé dans une zone arrière (31) de la construction (2) en dehors d'un hayon (6) ou est prévu et configuré pour l'agencement dans la zone arrière (31) de la construction (2) et/ou **en ce qu'**elle forme un élément d'un système qui comporte le système porteur (32).

6. Unité multifonction selon la revendication 5, **caractérisée en ce que** le système porteur (32) comporte un tiroir (35) prévu dans la zone d'un pare-chocs arrière (34) de la construction (2), mobile d'une position sortie (Sta) à une position rentrée (Ste) en particulier dans une carrosserie de la voiture particulière, ou un support de charge arrière pouvant être fixé de manière amovible sur un attelage ou sur un autre support de la voiture particulière.

7. Unité multifonction selon l'une ou plusieurs quelconques des revendications précédentes, **caractérisée en ce que**, dans la position de fonctionnement (Bst) du récipient (20), le couvercle (41) est en liaison active à l'aide de fermetures (42 et 43) avec des parois par exemple en regard (par exemple 39 et 40), après ouverture de ces fermetures (42 et 43) le récipient (20) pouvant être modifié dans la position de repos (Rst) de telle manière que les parois (37 et 38) soient empilées sur le fond (36) et le couvercle (41) forme l'unité structurelle (21) par l'intermédiaire des fermetures (42 et 43) avec le fond (36) et le couvercle (41).

8. Unité multifonction selon l'une ou plusieurs quelconques des revendications précédentes, **caractérisée en ce qu'**elle est pourvue dans sa fonction de plage arrière (45) dans une zone avant (49) - considérée dans le sens de la marche - d'un axe de pivotement (48) horizontal s'étendant transversalement au sens longitudinal de véhicule et/ou **en ce qu'**elle présente un palier de pivotement, en particulier des saillies de palier, pour le logement autour de l'axe de pivotement (48).

9. Unité multifonction selon l'une quelconque des revendications précédentes, **caractérisée en ce que** des moyens d'actionnement (50 et 51) par exemple sous la forme de câbles agissent sur la plage arrière (45), lesquels sont reliés au hayon (47), et/ou qu'elle présente au moins un entraîneur, en particulier un câble, qui est prévu pour la fixation sur la voiture particulière, et/ou un support pour un entraîneur, en particulier un câble, l'unité multifonction servant de plage arrière (45) pouvant être déplacée par l'entraîneur lors d'un actionnement d'une partie de carrosserie, en particulier d'un hayon ou d'un autre composant de la voiture particulière, sur lequel l'entraîneur est fixé.

10. Unité multifonction selon l'une quelconque des revendications précédentes, **caractérisée en ce qu'**elle présente une serrure pour le verrouillage de l'unité multifonction sur le système porteur et/ou une serrure pour le verrouillage d'un couvercle de l'unité multifonction.

11. Unité multifonction selon l'une quelconque des revendications précédentes, **caractérisée en ce qu'**elle forme un élément d'un système qui comporte au moins un composant intérieur d'une structure intérieure (24) pouvant être reliée fixement à la voiture particulière, en particulier des longerons (23 ; 23) de la structure intérieure (24).

12. Unité multifonction selon l'une quelconque des revendications précédentes, **caractérisée en ce qu'**elle présente un contour extérieur adapté à la structure intérieure (24) de la voiture particulière.
